# EUROPÄISCHE PATENTSCHRIFT

(11) **EP 0 662 266 B1**
(45) Veröffentlichungstag und Bekanntmachung des Hinweises auf die Patenterteilung: **14.08.1996**
(21) Anmeldenummer: 92920783.5
(22) Anmeldetag: 24.09.1992
(51) Int. Cl.: H02P 5/40, H02P 7/62

(54) **VERFAHREN UND VORRICHTUNG ZUR REGELUNG EINES UMRICHTERGESPEISTEN PERMANENTERREGTEN SYNCHRONMOTORS**
PROCESS AND DEVICE FOR REGULATING A CONVERTER-POWERED, PERMANENTLY EXCITED SYNCHRONOUS MOTOR
PROCEDE ET DISPOSITIF DE REGULATION D'UN MOTEUR SYNCHRONE A EXCITATION CONTINUE ALIMENTE PAR UN CONVERTISSEUR

(43) Veröffentlichungstag der Anmeldung: 12.07.1995
(73) Patentinhaber: SIEMENS AKTIENGESELLSCHAFT, 80333 München (DE)
(72) Erfinder: TÖLLE, Hans-Jürgen, D-8500 Nürnberg 90 (DE)
(86) Internationale Anmeldenummer: DE9200824
(87) Internationale Veröffentlichungsnummer: WO9407301

(56) Entgegenhaltungen:
- CONFERENCE RECORD OF THE 1989 IEEE INDUSTRY APPLICATIONS SOCIETY ANNUAL MEETING PART I November 1989, SAN DIEGO , CALIFORNIA Seiten 656 - 661 , XP91626 AKIRA KUMAMOTO AND YOSHIHISA HIRANE 'A semi-closed loop torque control of a buried permanent magnet motor based on a new flux weakening approach'
- PATENT ABSTRACTS OF JAPAN vol. 10, no. 179 (E-414)(2235) 24. Juni 1986 & JP,A,61 26 488
- IEEE TRANSACTIONS ON INDUSTRY APPLICATIONS Bd. 26, Nr. 3, Juni 1990, NEW YORK US Seiten 408 - 413 , XP148198 DIETRICH NAUNIN UND HANS-CHRISTIAN REUSS 'Synchronous Servo-Drive: A Compact Solution of Control Problems by Means of a Single-Chip Microcomputer'
- PATENT ABSTRACTS OF JAPAN vol. 005, no. 055 (E-052)16. April 1981 &JP,A,56 006 694

## Beschreibung

Die Erfindung bezieht sich auf ein Verfahren und eine Vorrichtung zur Regelung eines umrichtergespeisten permanenterregten Synchronmotors im Grunddrehzahlbereich mit anschließender Umschaltung auf Feldschwächung zur Erhöhung des Drehzahlbereichs, wobei dessen Motorstrom im Grunddrehzahlbereich in Abhängigkeit eines vorbestimmten Motorstrom-Sollwertes und eines ermittelten Motorstrom-Istwertes und im Feldschwächbereich in Abhängigkeit eines ermittelten Vorsteuerwinkels geregelt wird.

Der Drehzahlbereich von Antrieben mit umrichtergespeisten permanenterregten Synchronmaschinen, auch bekannt als Brushless-DC-Antriebe, ist durch die sogenannte Spannungsgrenze begrenzt. D.h., die induzierte Maschinenspannung erreicht den Wert der Eingangsgleichspannung des Umrichters, so daß keine Spannungsdifferenz mehr zur Verfügung steht, um einen Maschinenstrom einzuprägen. Dies wirkt sich bei verschiedenen Anwendungen nachteilig aus, z.B. kann beim Einsatz eines solchen Antriebs in einem Elektro-Fahrzeug das Leistungsvermögen der Fahrbatterie nur dann in einem weiten Drehzahlbereich ausgenutzt werden, wenn der Antrieb sehr stark überdimensioniert wird.

Aus der DE 40 21 098 Al ist ein Verfahren bekannt, mit dem der Drehzahlbereich eines permanentmagneterregten Synchronmotors, der über einen an einer konstanten Netzspannung liegenden Umrichter gespeist wird, erhöht wird. Bei diesem Verfahren wird bis zum Erreichen der Grenzdrehzahl, die durch die konstante Zwischenkreisspannung des Umrichters sowie die EMK und die Induktivität des Motors bestimmt ist, eine feldorientierte Regelung des Maschinenstroms vorgenommen.

Der Strom wird somit derart geregelt, daß er mit der Polradspannung, d.h. der EMK des Motors, in Phase ist. Zur Regelung der Stromamplitude erfolgt eine entsprechende Taktung der Spannung. Erreicht der Motor seine Grenzdrehzahl und ist eine Erhöhung seiner Drehzahl über diese Grenzdrehzahl hinaus erforderlich erfolgt eine Regelungsumschaltung von der feldorientierten Regelung auf eine Regelung des Polradwinkels, wobei der zwischen der Polradspannung und der Motorspannung gebildete Polradwinkel im Sinne einer Übererregung verändert wird. Eine derartige Erhöhung der Drehzahl über die Grenzdrehzahl hinaus wird weitgehend mit den ohnehin für die Drehzahlregelung vorhandenen Reglerelementen erzielt. Dies geschieht durch eine entsprechende Verarbeitung der von dem vorhandenen Drehzahlregler und dem Drehzahl-Istwertgeber gelieferten Signalen. Durch eine entsprechende Verknüpfung dieser Signale wird ein Steuersignal für eine lastabhängige Einstellung des Polradwinkels erzeugt. Hierzu sind zusätzlich nur die die Verknüpfung bewirkenden Bauelemente erforderlich.

Durch diese lastabhängige Einstellung des Polradwinkels steht der Stromzeiger nicht mehr senkrecht zum Flußzeiger, sondern verschiebt ihn so, daß der entstehende Blindstrom das Maschinenfeld schwächt und daher die Maschinenspannung verringert werden kann.

Bei der Anwendung der Vorkommutierung eines permanentmagneterregten Synchronmotors treten folgende Probleme auf:
1. Bei Brushless-DC-Antrieben wird die Stellung des Rotors mit einer Auflösung von 60° el. erfaßt. Für die Realisierung der Vorkommutierung, auch Vorsteuerung genannt, muß die Auflösung wesentlich erhöht werden und zwar möglichst ohne einen zusätzlichen Geber zu gebrauchen.
2. Der Vorkommutierungswinkel muß auf eine Weise vorgegeben werden, die folgende Randbedingungen erfüllt:
   - möglichst hoher Wirkungsgrad des Antriebs
   - möglichst ruckfreier Übergang von Grunddrehzahl in den Feldschwachbereich und umgekehrt
   - hohe Drehzahldynamik.
3. Dem Motorstromregler muß neben dem Sollwert für die drehmomentbildende Stromkomponente auch ein Sollwert für die feldbildende Stromkomponente vorgegeben werden. Dieser Sollwert muß aus verschiedenen Kennwerten des Antriebs und des Arbeitspunktes hergeleitet werden.
4. Im Allgemeinen werden für die Regelung solcher Antriebe heutzutage Mikroprozessoren eingesetzt, deren Rechenleistung und damit die Abtastfrequenz der Regelung begrenzt ist.

In diesem Zusammenhang ergeben sich bei der Erfassung des Motorstromes daher folgende Probleme:
- Im Feldschwachbereich nimmt der Motorstrom Kurvenformen an, die erheblich von der idealen Rechteck-Kurvenform ab weichen und die durch analythische Formeln nicht zu be schreiben sind (Zeitschrift "IEEE Transactions on Indu stry Applications, Vol. 1A-20, No. 4, Juli/August 1984, Seiten 803-813).
- Mit der Feldschwächung sollen hohe Drehzahlen (Frequen zen) erreicht werden. Mit steigender Drehzahl nimmt aber das Verhältnis von Abtastfrequenz der Regelung zur Grund frequenz des Motorstromes immer mehr ab.

Daher wird die Erfassung des Motorstromes im Feldschwächbereich - insbesondere einen nach Wirk- und Blindkomponente getrennte Erfassung - durch eine Abtastregelung praktisch unmöglich.

Der Erfindung liegt nun die Aufgabe zugrunde, ein Verfahren und eine Vorrichtung zur Regelung eines umrichtergespeisten permanenterregten Synchronmotors anzugeben, wodurch die genannten Probleme nicht mehr auftreten und die Vorrichtung mittels eines Mikroprozessors verwirklicht werden kann.

Diese Aufgabe wird erfindungsgemäß dadurch gelöst, daß der Motorstrom im Feldschwächbereich in Abhängigkeit eines von der Belastung des Synchronmotors vorgebbaren Umrichtereingangsstrom-Sollwertes, eines ermittelten Umrichtereingangsstrom-Istwertes und eines ermittelten Vorsteuerwinkels geregelt wird, wobei dieser Vorsteuerwinkel in Abhängigkeit eines eine maximale Steuergröße übersteigenden Teils eines Steuergrößen-Istwertes bestimmt wird und wobei der Umrichtereingangsstrom-Sollwert proportional einem vorgebbarem Drehmoment-Sollwert ist.

Erfindungsgemäß wird im Feldschwächbereich nicht mehr der Motorstrom sondern der Eingangsgleichstrom des Umrichters geregelt. Die Sollwertvorgabe dieser Regelung des Eingangsgleichstromes des Umrichters entspricht dann näherungsweise einer Leistungsvorgabe. In Abhängigkeit dieser Leistungsvorgabe wird ein zugehöriger Vorsteuerwinkel ermittelt, wodurch zu jedem Arbeitspunkt der Motorstrom in Betrag und Phase, ohne eine Sollwertvorgabe für die Blindstromkomponente und eine Stromerfassung bei hohen Frequenzen zu benutzen, vorliegt.

Bei einer vorteilhaften Ausführungsform des Verfahrens wird bei Erreichen der Vollaussteuerung vom Grunddrehzahlbereich in den Feldschwächbereich umgeschaltet. Zu diesem Zeitpunkt ist die Stromregelung und die Begrenzungsregelung des Motorstrom-Sollwertes in Eingriff, so daß ruckfrei von der Motorstromregelung auf die Eingangsgleichstremregelung umgeschaltet werden kann. D.h. der Stromregler erzeugt keinen Sprung an seinem Ausgang. Der Zustand der Vollaussteuerung bzw. das Erreichen der Spannungsgrenze wird aus dem Ausgangsignal des Stromreglers ermittelt. Die Umschaltung kann jedoch auch schon früher eingeleitet werden. Der Bereich, in dem die Umschaltung vorgenommen werden kann, beginnt mit dem Zeitpunkt, wenn die Stromregelung und die Begrenzungsregelung in Eingriff sind, und endet, wenn die Vollaussteuerung überschritten wird. Durch die Auswahl dieses Bereiches ist ein vollkommener ruckfreier Übergang vom Grunddrehzahlbereich in den Feldschwachbereich und zurück bei allen Lastzuständen gewährleistet.

Eine erfindungsgemäße Vorrichtung zur Durchführung des erfindungsgemäßen Verfahrens ist dem Anspruch 5 zu entnehmen. Dabei wird der Motorstrom-Sollwert in Abhängigkeit einer übergeordneten Begrenzungsregelung aus einem einstellbaren Drehmomenten-Sollwert erzeugt, wobei der Sollwert dieser Begrenzungsregelung ebenfalls mittels einer Konstanten aus dem einstellbaren Drehmomenten-Sollwert gebildet wird und als Istwert ein gemessener Umrichtereingangsstrom verwendet wird.

Durch die Verkopplung des Umrichtereingangsstrom-Sollwertes mit einem einstellbaren Drehmoment-Sollwert wird erreicht, daß bei jedem Lastzustand des permanenterregten Synchronmotors ein Bereich erreicht wird, in dem der Umrichtereingangsstrom-Regeldifferenzwert gleich Null ist. Da auch der Motorstrom-Regeldifferenzwert gleich Null ist, wird erreicht, daß von der Motorstromregelung in die Eingangsgleichstromregelung ruckfrei umgeschaltet werden kann.

Bei einer vorteilhaften Ausführungsform der Vorrichtung ist für die Steuer- und Regeleinrichtung, die Begrenzungsregelung und die Vorsteuerwinkelsteuerung ein Mikroprozessor vorgesehen. Da für die erfindungsgemäße Vorrichtung relativ wenig zusätzliche Rechenzeit im Grunddrehzahlbereich (Abfrage der Aussteuerung, Betätigung der Umschalter) und im Feldschwächbereich, wo die Änderung der Stellgröße "vorsteuerwinkel" nur alle 60° el. Einfluß auf die Regelstrecke nehmen kann, benötigt wird, sinkt trotz der zusätzlichen Regelung und Steuerung die Rechenzeit des Mikroprozessors erheblich, so daß der Mikroprozessor der Steuer- und Regeleinrichtung des Umrichters weiter benutzt werden kann.

Zur weiteren Erläuterung wird auf die Zeichnung Bezug genommen, in der ein Ausführungsbeispiel der erfindungsgemäßen Vorrichtung zur Durchführung des Verfahrens zur Regelung eines umrichtergespeisten permanenterregten Synchronmotors schematisch veranschaulicht ist.
- FIG 1: zeigt ein Blockschaltbild eines bekannten Antriebs für ein Elektro-Fahrzeug,
- FIG 2: zeigt ein Blockschaltbild eines erfindungsgemäßen Antriebs für die Regelung im Feldschwächbereich, in
- FIG 3: ist in einem Diagramm über der Steuerspannung der Vorsteuerwinkel veranschaulicht, in
- FIG 4: ist ein Blockschaltbild eines erfindungsgemäßen Antriebs für die Regelung im Grunddrehzahlbereich und im Feldschwächbereich dargestellt, in
- FIG 5: ist in einem Diagramm über der Drehzahl bzw. der Aussteuerung das Moment bzw. der Motorstrom für den Motorbetrieb bei Vollast veranschaulicht, die
- FIG 6: zeigt in einem Diagramm über der Drehzahl bzw. der Aussteuerung das Moment bzw. den Motorstrom für den Motorbetrieb bei Teillast und in
- FIG 7: ist in einem Diagramm über der Drehzahl bzw. der Aussteuerung das Moment bzw. der Motorstrom für den Generatorbetrieb bei Teillast dargestellt.

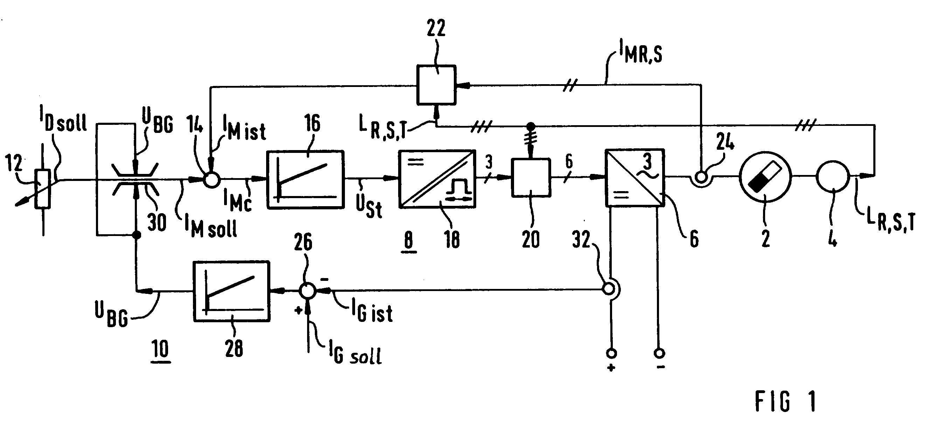

Die FIG 1 zeigt ein Blockschaltbild eines bekannten Antriebs, das allgemein bei Elektro-Fahrzeugen eingesetzt wird. Dieser Antrieb besteht aus einem permanent erregten Synchronmotor 2 mit einem Rotorlagegeber 4, einem Umrichter 6, einer Steuer- und Regeleinrichtung 8, einer Begrenzungsregelung 10 und einem Drehmomentsollwertgeber 12, beispielsweise ein Gaspedal eines Elektro-Fahrzeugs. Als Umrichter 6 ist ein Wechselrichter, insbesondere ein Pulswechselrichter vorgesehen, der abschaltbare Stromrichterventile, beispielsweise Transistoren, Insulated-Gate-Bipolar-Transistors (IGBT) oder Gate-Turn-Off-Tyristoren (GTO-Tyristoren), enthält. Dieser Umrichter 6 wird aus einer konstanten Gleichspannungsquelle gespeist, die wegen der Übersichtlichkeit nicht näher dargestellt ist. Als Gleichspannungsquelle kann beispielsweise ein an einer konstanten Netzspannung liegender ungesteuerter Gleichrichter oder eine Fahrbatterie eines Elektro-Fahrzeugs vorgesehen sein.

Die Steuer- und Regeleinrichtung 8 dieses Antriebs besteht aus einem ersten Vergleicher 14, einem Stromregler 16, einem Steuersatz 18, einem Impulsverteiler 20 und einer Einrichtung 22 zur Motorstrom-Istwertbildung. Die Einrichtung 22 zur Motorstrom-Istwertbildung ist eingangsseitig einerseits mit den Ausgängen des Rotorlagegebers 4 und andererseits mit zwei Stromerfassungseinrichtungen 24, die beispielsweise den Phasenstrom-Istwert I_{MR} und I_{MS} der Phase R und S des permanenterregten Synchronmotors 2 messen, verknüpft. Ausgangsseitig steht an dieser Einrichtung 22 der ermittelte Motorstrom-Istwert I_{Mist} an und die Einrichtung 22 ist mit einem negativen Eingang des ersten Vergleichers 14 verbunden. Der nähere Aufbau und die Wirkungsweise dieser Einrichtung 22 ist der EP 0 208 847 Al zu entnehmen. Am positiven Eingang des ersten Vergleichers 14 steht ein ermittelter Motorstrom-Sollwert I_{Msoll} an. Ausgangsseitig ist dieser Vergleicher 14 mit dem Stromregler 16 verbunden, dem der Steuersatz 18 mit nachgeschaltetem Impulsverteiler 20 nachgeschaltet ist.

Ein derartiger Aufbau der Steuer- und Regeleinrichtung 8 für einen umrichtergespeisten permanenterregten Synchronmotor 2 ist aus der EP 0 261 540 Al bekannt, wobei jedoch der Motorstrom-Sollwert mittels einer überlagerten Drehzahlsteuerung ermittelt wird. Bei einem drehzahlgeregelten Antrieb wird der Stromsollwert so vorgegeben, daß sich das von ihm geforderte Drehmoment - und somit quasi automatich der "richtige" Blindstrom- einstellt.

Der erste Vergleicher 14 bildet in Abhängigkeit eines Motorstrom-Sollwertes I_{Msoll} und eines generierten Motorstrom-Istwertes I_{Mist} eine Regelabweichung I_{Me}, die dem Stromregler 16 zugeführt wird. Dieser Stromregler 16 bildet daraus eine entsprechende Steuergröße U_{St}, die im Steuersatz 18 in drei rechteckförmige Steuersignale umgewandelt wird, deren Tastverhältnisse in Abhängigkeit der Steuergröße U_{St} eingestellt werden. Diese drei Steuersignale werden mittels des Impulsverteilers 20 auf die Stromrichterventile des Umrichters 6 verteilt. Die Verteilung der Steuersignale geschieht in Abhängigkeit der Lagesignale L_{R,S,T} des Rotorlagegebers 4, so daß der Motorstrom des permanenterregten Synchronmotors 2 mit der Polradspannung, d.h. EMK des Motors 2, in Phase ist.

Die überlagerte Begrenzungsregelung 10 besteht aus einem zweiten Vergleicher 26, einem Begrenzungsregler 28 und einem Begrenzer 30. Der positive Eingang dieses zweiten Vergleichers 26 ist mit einer Stromerfassungseinrichtung 32 verknüpft, die in der positiven Eingangsleitung des Umrichters 6 angeordnet ist. Diese Stromerfassungseirichtung 32 mißt den Eingangsstrom-Istwert I_{Gist} des Umrichters 6, der mittels des Vergleichers 26 mit einem Eingangsgleichstrom-Sollwert I_{Gsoll} verglichen wird. Ausgangsseitig ist dieser zweite Vergleicher 26 über den Begrenzungsregler 28 mit dem Begrenzer 30 verknüpft. Sobald der Eingangsgleichstrom-Istwert I_{Gist} den Eingangsgleichstrom-Sollwert I_{Gsoll} übersteigt, entsteht am Ausgang des Begrenzungsreglers 28 in Abhängigkeit der Abweichung ein Begrenzersteuersignal U_{BG}, mit dem der Begrenzer 30 angesteuert wird.

Bei der Verwendung dieses dargestellten Antriebs bei einem Elektro-Fahrzeugs wird der Eingangsgleichstrom als Batteriestrom und diese Begrenzungsregelung 10 als Batteriestrom-Begrenzungsregelung bezeichnet. Diese Batteriestrom-Begrenzungsregelung wird gebraucht, damit die Fahrbatterie durch die Entnahme eines zu hohen Batteriestromes nicht zerstört wird.

Der Begrenzer 30 ist eingangsseitig mit dem Drehmomentsollwertgeber 12 und ausgangsseitig mit dem positiven Eingang des ersten Vergleichers 14 verknüpft. Mit diesem Sollwertgeber 12, das beispielsweise ein Gaspedal eines Elektro-Fahrzeugs sein kann, wird ein einem Drehmoment entsprechender Strom-Sollwert I_{Dsoll} eingestellt, der in Abhängigkeit des erzeugten Begrenzungssteuersignals U_{BG} begrenzt wird und als Motorstrom-Sollwert I_{Msoll} am Ausgang dieses Begrenzers 30 ansteht.

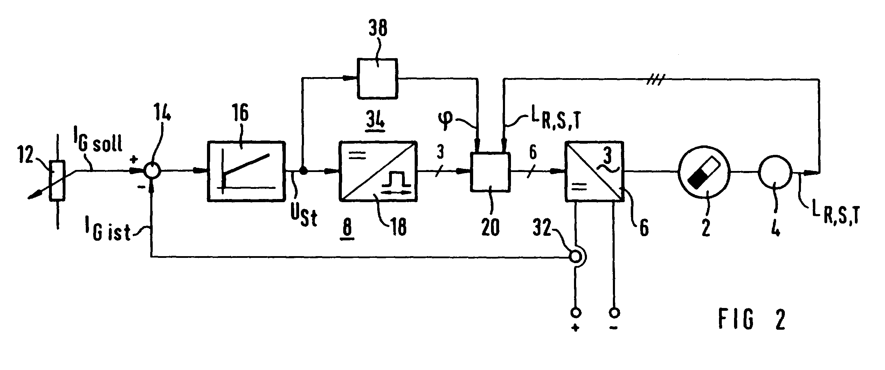

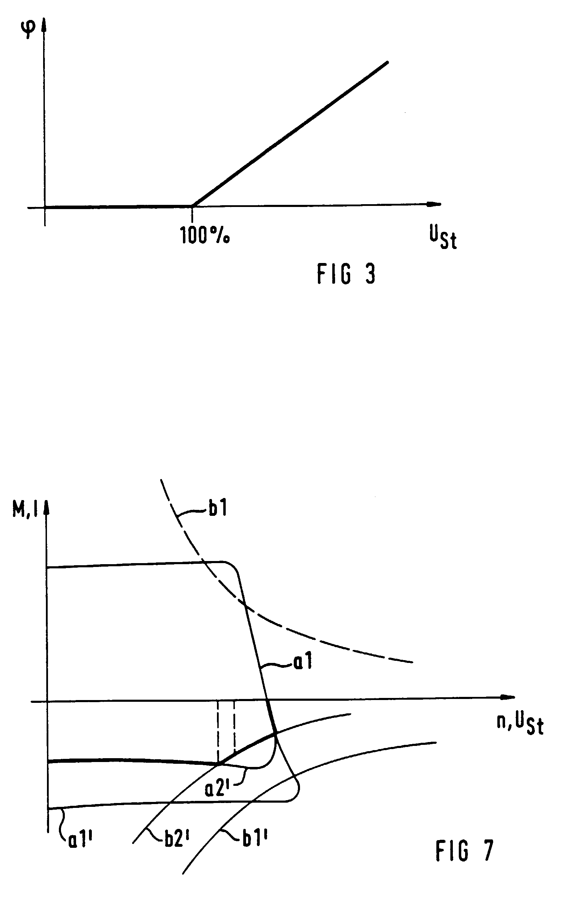

Die FIG 2 zeigt ein Blockschaltbild eines erfindungsgemäßen Antriebs für den Feldschwächbereich. Dieser Antrieb besteht aus einem permanenterregten Synchronmotor 2 mit einem Rotorlagegeber 4, einem Umrichter 6, einer Steuer- und Regeleinrichtung 8 und einer Vorsteuerwinkelsteuerung 34. Gegenüber dem Blockschaltbild nach FIG 1 sind der negative Eingang des ersten Vergleichers 14 mit der Stromerfassungseinrichtung 32 und sein positiver Eingang mit dem Drehmomentsollwertgeber 12 verknüpft. Außerdem ist die Vorsteuerwinkelsteuerung 34 der Steuer- und Regeleinrichtung 8 unterlagert. Diese Vorsteuerwinkelsteuerung 34 enthält eine Einrichtung 38 zur Bestimmung eines Vorsteuerwinkels ϕ; wobei deren Eingang mit dem Ausgang des Stromreglers 16 verbunden ist. Der Ausgang der Einrichtung 38 ist mit dem Impulsverteiler 20 verbunden. Als Einrichtung 38 kann ein Kennliniengeber vorgesehen sein, dessen Kennlinie in der Figur 3 näher dargestellt ist. Danach wird erst dann ein Vorsteuerwinkel ϕ generiert, wenn die Steuergröße U_{St} am Ausgang des Stromreglers 16 die maximale Steuergröße U_{Stmax} übersteigt. Steigt die ermittelte Abweichung an, so steigt proportional dazu der Wert des Vorsteuerwinkels ϕ gemäß FIG 3 auch an. Dieser Winkel ϕ wird dem Impulsverteiler 20 zugeführt, so daß die Kommutierung der Zündsignale entsprechend dem Vorsteuerwinkel ϕ früher erfolgt. Dadurch wird eine stromtreibende Spannung (Differenzspannung zwischen Umrichterausgangspannung und induzierter Spannung des Synchronmotors) eingestellt, wodurch ein geforderter Motorstrom eingeprägt werden kann, obwohl der Umrichter an seiner Spannungsgrenze arbeitet. Dieser Bereich wird auch Feldschwächbereich genannt.

Mit dem in FIG 1 dargestellten Antrieb kann die Drehzahl nur bis zur Spannungsgrenze des Umrichters 8 geregelt werden. Sobald diese Spannungsgrenze erreicht ist, bricht das Drehmoment sehr schnell zusammen. Dieser Bereich wird auch Grunddrehzahlbereich genannt.

Soll nun ein Antrieb sowohl im Grunddrehzahlbereich als auch im Feldschwächbereich geregelt werden, so könnte zwischen den beiden Regelungen gemäß FIG 1 und 2 umgeschaltet werden. Ein Umschaltung zwischen zwei Regelungen für einen umrichtergespeisten permanenterregten Synchronmotor ist, wie eingangs genannt, aus der DE 40 21 098 Al bekannt. Dabei soll darauf geachtet werden, daß ein vollkommen ruckfreier Übergang vom Grunddrehzahlbereich in den Feldschwächbereich und zurück bei allen Last zuständen gewährleistet wird.

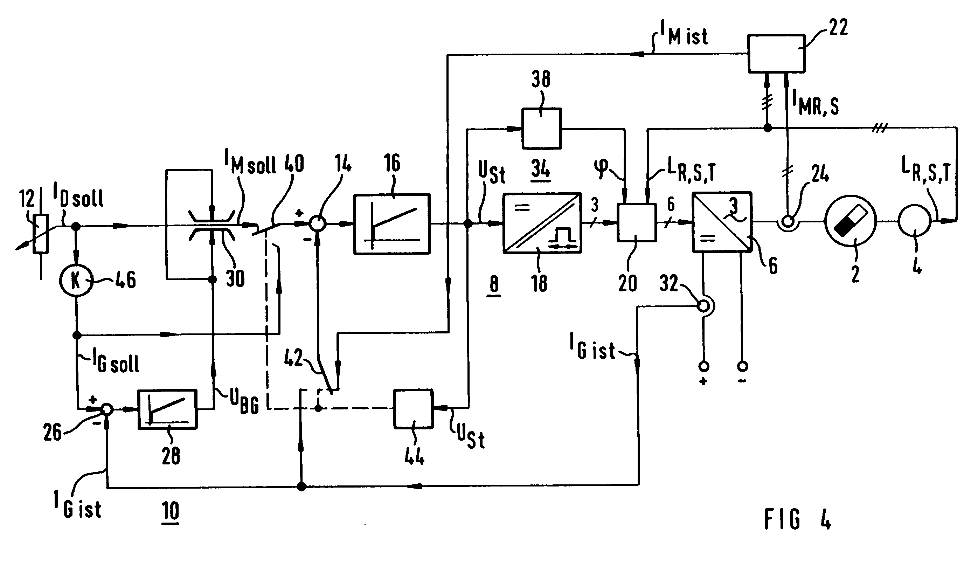

In FIG 4 ist eine Vorrichtung zur Regelung eines umrichtergespeisten permanenterregten Synchronmotors 2 dargestellt, mit der der Synchronmotor 2 vollkommen ruckfrei vom Grunddrehzahlbereich in den Feldschwächbereich und zurück bei allen Lastzuständen geregelt werden kann.

Diese Vorrichtung besteht aus einem Umrichter 6, einer Steuer- und Regeleinrichtung 8, einer Begrenzungsregelung 10, einer Vorsteuerwinkelsteuerung 34 und einer Umschalteinrichtung, die aus zwei Umschaltern 40 und 42 und einem Stellglied 44 besteht. Die Steuer- und Regeleinrichtung 8, die Begrenzungsregelung 10 und die Vorsteuerwinkelsteuerung 34 sind in den Figuren 1 und 2 ausführlich dargestellt und in den zugehörigen Beschreibungsteilen beschrieben, so daß hier nur noch auf die Umschalteinrichtung eingegangen wird.

Der eine Umschalter 40 dieser Umschalteinrichtung ist derart zwischen dem Begrenzer 30 und dem ersten Vergleicher 14 geschaltet, daß sein erster Eingang mit dem Ausgang des Begrenzers 30, sein zweiter Eingang mit dem positiven Eingang des zweiten Vergleichers 26 und sein Ausgang mit dem positiven Eingang des ersten Vergleichers 14 verknüpft sind. Der andere Umschalter 42 ist derart zwischen den ersten Vergleicher 14 und der Einrichtung 22 zur Motorstrom-Istwertbildung geschaltet, daß sein erster Eingang mit dem Ausgang der Einrichtung 22, sein zweiter Eingang mit dem negativen Eingang des zweiten Vergleichers 26, bzw. der Stromerfassungseinrichtung 32 und sein Ausgang mit dem negativen Eingang des ersten Vergleichers 14 verknüpft sind. Diese Umschalter 40 und 42 werden mittels des Stellgliedes 44 gesteuert, wobei dieses Stellglied 44 seine Information vom Stromregler 16 erhält. Außerdem ist der positive Eingang des zweiten Vergleichers 26, nicht wie in Figur 2 dargestellt, mit dem Drehmomentsollwertgeber 12 direkt, sondern über ein Konstantglied 46 verknüpft. In dieser Darstellung sind die Umschalter 40 und 42 so geschaltet, daß der permanenterregte Synchronmotor 2 im Grunddrehzahlbereich geregelt wird.

Bei einer vorteilhaften Ausführungsform der Vorrichtung gemäß FIG 4 ist für die Steuer- und Regeleinrichtung 8, die Begrenzungsregelung 10 und die Vorsteuerwinkelsteuerung 34 ein Mikroprozessor vorgesehen. Da die dargestellte Struktur der Regelung nur relativ wenig zusätzliche Rechenzeit im Grunddrehzahlbereich und im Feldschwächbereich weniger benötigt, sinkt die Rechenzeitbelastung des Mikroprozessors im Feldschwächbereich.

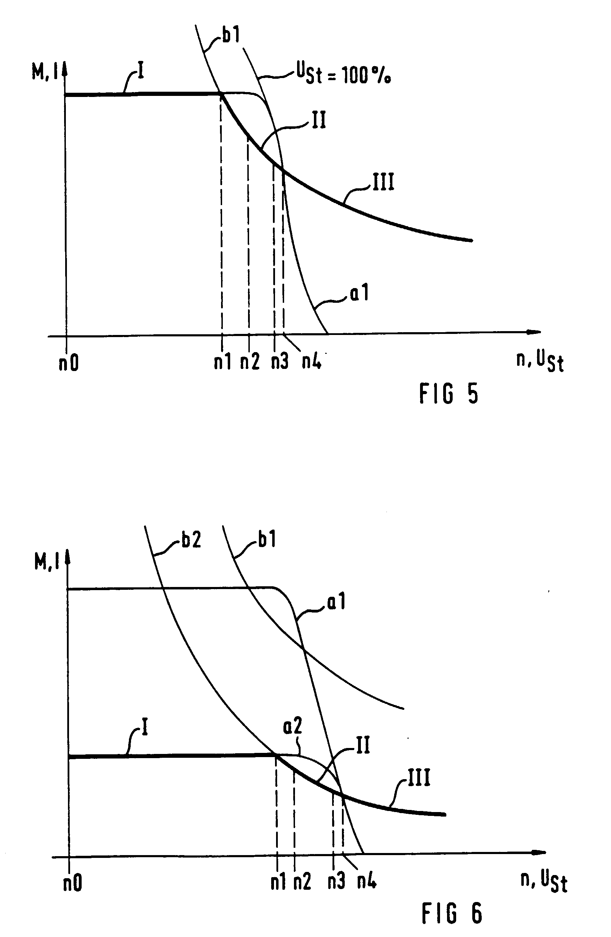

Anhand der FIG 5 bis 7 wird das Verfahren zur Regelung des umrichtergespeisten permanenterregten Synchronmotors 2 näher beschrieben :

In dem Diagramm der FIG 5 bzw. 6 ist mit al bzw. a2 eine Drehmoment-Drehzahl-Kennlinie eines umrichtergespeisten permanenterregten Synchronmotors 2 dargestellt, wobei die Figur 5 den Vollast-Fall und die FIG 6 den Teillast-Fall zeigt. Die mit bl bzw. b2 gekennzeichnete Kurve stellt die Leistungshyperbel der Gleichspannungsquelle bzw. der Fahrbatterie dar. Durch die Bestimmung des Eingangsgleichstrom-Sollwertes I_{Gsoll} wird die Lage der Leistungshyperbel bl bzw. b2 festgelegt. Die Lage dieser Leistungshyperbel bl bzw. b2 wird so zur Drehmoment-Drehzahl-Kennlinie al bzw. a2 gelegt, daß in jedem Lastzustand die Kennlinien al und bl bzw. a2 und b2 sich schneiden (zwei Schnittpunkte). Die Kennlinie, die in dem Diagramm gemäß FIG 5 bzw. 6 fett dargestellt ist, bildet die Grenzkurve des Antriebs, mit Vorkommutierung gemäß FIG 4, der im Grunddrehzahlbereich und im Feldschwächbereich geregelt wird. Der Abschnitt I dieser Grenzkurve befindet sich im Drehzahlbereich n1-n0. In diesem Bereich ist der Stromregler 16 im Eingriff. Bei der Drehzahl n1 schneiden sich die Drehmoment-Drehzahl-Kennlinie al bzw. a2 mit der Leistungshyperbel b1 bzw. b2, d.h., der Begrenzungsregler 28 greift, so daß der Motorstrom-Sollwert I_{Msoll} auf den Eingangsgleichstrom-Sollwert I_{Gsoll} begrenzt wird. Bei der Drehzahl n4 ist ein weiterer Schnittpunkt dieser beiden Kennlinien al und bl bzw. a2 und b2. Bei dieser Drehzahl n4 hat der Umrichter 6 seine Spannungsgrenze U_{Stmax} bzw. die max. Aussteuerung a = 100 % erreicht.

Im Bereich n4-n1 (Abschnitt II der Grenzkurve des Antriebs mit Vorkommutierung) ist sowohl der Stromregler 16 als auch der Begrenzungsregler 28 in Engriff, d. h., die Regeldifferenz an diesen Reglern 16 und 28 wird zu Null geregelt. Innerhalb diese Bereiches n4-n1 können nun die Umschalter 40 und 42 betätigt werden, ohne daß am Ausgang des Stromreglers 16 ein Sprung entsteht. Der genaue Zeitpunkt der Umschaltung wird sinnvollerweise in Abhängigkeit der Ausgangsgröße (Steuergröße U_{St}) des Stromreglers 16 vorgenommen, da diese die Information beinhaltet, ob der Antrieb mit Vorkommutierung betrieben wird. Die Umschaltung erfolgt beispielsweise kurz vor Erreichen der Vollausteuerung (a = 100 %). Dieser Zeitpunkt ist hier bei der Drehzahl n3 erreicht. Damit nicht andauernd zwischen Motorstromregelung und Batteriestromregelung hin- und hergeschaltet wird, ist das Stellglied 44 außerdem mit einer Hysterese versehen. Somit kann vom Feldschwächbereich erst bei der Drehzahl n2, die einem vorgebbaren Aussteuerungswert a entspricht, wieder in den Grunddrehzahlbereich umgeschaltet werden, wobei die Drehzahldifferenz n3-n2 (Aussteuerdifferenzwert) proportional der Hysterese ist. Ist vom Grunddrehzahlbereich in den Feldschwächbereich umgeschaltet worden, so befindet sich der Antrieb im Abschnitt III der Grenzkurve des Antriebs mit Vorkommutierung. Wie weit die Drehzahl erhöht werden kann, hängt vom Wert des Vorsteuerwinkels ϕ bzw. vom verlangtem Drehmoment des Antriebs ab. Daß dieses erfindungsgemäße Verfahren nicht nur im Motorbetrieb funktioniert, sondern auch im Generatorbetrieb (Bremsen), zeigt das Diagramm der FIG 7.

Mittels diesem erfindungsgemäßen Verfahren kann man einen umrichtergespeisten permanenterregten Synchronmotor vollkommen ruckfrei vom Grunddrehzahlbereich in den Feldschwächbereich und zurück bei allen Last zuständen umschalten, wobei sich im Feldschwächbereich der Motorstrom in Abhängigkeit des Vorsteuerwinkels ϕ richtig einstellt, ohne dabei einen Sollwert für die Blindstromkomponente vorgeben zu müssen und den Motorstrom-Istwert ermitteln zu müssen.

## Patentansprüche

1. Verfahren zur Regelung eines umrichtergespeisten permanenterregten Synchronmotors (2)im Grunddrehzahlbereich mit anschließender Umschaltung auf Feldschwächung zur Erhöhung des Drehzahlbereichs, wobei dessen Motorstrom im Grunddrehzahlbereich in Abhängigkeit eines vorbestimmten Motorstrom-Sollwertes (I_{Msoll}) und eines ermittelten Motorstrom-Istwertes (I_{Mist}) und im Feldschwächbereich in Abhängigkeit eines ermittelten Vorsteuerwinkels (ϕ) geregelt wird, **dadurch gekennzeichnet**, daß im Feldschwächbereich der Motorstrom in Abhängigkeit eines von der Belastung des Synchronmotors (2) vorgebbaren Umrichtereingangsstrom-Sollwertes (I_{Gsoll}), eines ermittelten Umrichtereingangsstrom-Istwertes ((I_{Gist}) und des ermittelten Vorsteuerwinkels (ϕ) geregelt wird, wobei dieser Vorsteuerwinkel (ϕ) in Abhängigkeit eines eine maximale Steuergröße (U_{Stmax}) übersteigenden Teils eines Steuergrößen-Istwertes (U_{St}) bestimmt wird und wobei der Umrichtereingangsstrom-Sollwert (I_{Gsoll}) proportional einem vorgebbaren Drehmoment-Sollwert (I_{Dsoll}) ist.

2. Verfahren nach Anspruch 1, **dadurch gekennzeichnet**, daß im Grunddrehzahlbereich der Motorstrom-Sollwert (I_{Msoll}) gleich einem vorgebbaren Drehmoment-Sollwert (I_{Dsoll}) ist, der in Abhängigkeit eines Umrichtereingangsstrom-Sollwertes (I_{Gsoll}) und eines gemessenen Umrichtereingangsstrom-Istwertes (I_{Gist}) begrenzbar ist.

3. Verfahren nach Anspruch 1, **dadurch gekennzeichnet**, daß bei Erreichen der Vollaussteuerung vom Grunddrehzahlbereich in den Feldschwächbereich umgeschaltet wird.

4. Verfahren nach Anspruch 1, **dadurch gekennzeichnet**, daß sobald der Drehmoment-Sollwert (I_{Dsoll}) begrenzt wird, vom Grunddrehzahlbereich in den Feldschwächbereich umgeschaltet wird.

5. Vorrichtung zur Durchführung des Verfahrens nach einem der Ansprüche 1 bis 4 zur Regelung eines permanenterregten Synchronmotors (2) mit einem Rotorlagegeber (4), wobei dieser Synchronmotor (2) mittels eines Umrichters (6) aus einer Gleichspannungsquelle gespeist wird, dessen Steuer- und Regeleinrichtung (8) aus einem ersten Vergleicher (14), einem Stromregler (16), einem Steuersatz (18), einem Impulsverteiler (20) und einer Einrichtung (22) zur Motorstrom-Istwertbildung besteht, wobei dieser Steuer- und Regeleinrichtung (8) eine Begrenzungsregelung (10) übergeordnet ist, die aus einem zweiten Vergleicher (26), einem Begrenzungsregler (28) und einem Begrenzer (30) besteht, wobei der Ausgang dieses Begrenzers (30) mit dem positiven Eingang des ersten Vergleichers (14) und sein Eingang mit einem Drehmomentsollwertgeber (12) und wobei der negative Eingang des zweiten Vergleichers (26) mit einer Stromerfassungseinrichtung (32) am Eingang des Umrichters (6) verknüpft sind, **dadurch gekennzeichnet**, daß zwischen dem Begrenzer (30) und dem erstem Vergleicher (14) ein erster Umschalter (40) angeordnet ist, dessen zweiter Eingang mit dem positiven Eingang des zweiten Vergleichers (26) verknüpft ist, daß zwischen der Einrichtung (22) zur Motorstrom-Istwertbildung und dem ersten Vergleicher (14) ein zweiter Umschalter (42) angeordnet ist, dessen zweiter Eingang mit dem negativen Eingang des zweiten Vergleichers (26) verknüpft ist, daß diese Umschalter (40,42) mittels eines Stellgliedes (44) gesteuert werden, das eingangsseitig mit dem Ausgang des Stromreglers (10) verbunden ist, und daß der Steuer- und Regeleinrichtung (8) eine Vorsteuerwinkelsteuerung (34) unterlagert ist, die eine Einrichtung (38) zur Bestimmung eines Vorsteuerwinkels (ϕ) enthält, wobei diese Einrichtung (38) ausgangsseitig mit einem Eingang des Impulsverteilers (20) und eingangsseitig mit dem Ausgang des Stromreglers (16) verknüpft ist.

6. Vorrichtung nach Anspruch 5, **dadurch gekennzeichnet**, daß für die Steuer- und Regeleinrichtung (8), die Begrenzungsregelung (10) und die Vorsteuerwinkelsteuerung (34) ein Mikroprozessor vorgesehen ist.

## Claims

1. Method for regulating a converter-fed permanently excited synchronous motor (2) in the base speed range with subsequent transfer to field weakening to increase the speed range, whereby its motor current in the base speed range is regulated in dependence upon a predetermined desired motor-current value (I_{Msoll}) and a determined actual motor-current value (I_{Mist}) and in the field-weakening range in dependence upon a determined precontrol angle (ϕ), characterized in that regulation takes place in the field-weakening range of the motor current in dependence upon a desired converter-input-current value (I_{Gsoll}) specifiable by the loading of the synchronous motor (2), a determined actual converter-input-current value (I_{Gist}) and the determined precontrol angle (ϕ), whereby this precontrol angle (ϕ) is determined in dependence upon a part of an actual controlled-variable value (U_{St}) exceeding a maximum controlled variable (U_{Stmax}) and whereby the desired converter-input-current value (I_{Gsoll}) is proportional to a specifiable desired torque value (I_{Dsoll}).

2. Method according to claim 1, characterized in that in the base speed range the desired motor-current value (I_{Msoll}) is equal to a specifiable desired torque value (I_{DsoIl}) which can be limited in dependence upon a desired converter-input-current value (I_{Gsoll}) and a measured actual converter-input-current value (I_{Gist}).

3. Method according to claim 1, characterized in that when the full modulation is reached, transfer takes place from the base speed range into the field-weakening range.

4. Method according to claim 1, characterized in that as soon as the desired torque value (I_{Dsoll}) is limited, transfer takes place from the base speed range into the field-weakening range.

5. Device for implementing the method according to one of claims 1 to 4 to regulate a permanently excited synchronous motor (2) with a rotor position encoder (4), whereby this synchronous motor (2) is fed by means of a converter (6) from a direct-voltage source, the control and regulating device (8) of which consists of a first comparator (14), a current controller (16), trigger equipment (18), a pulse distributor (20) and a device (22) for motor-current actual-value formation, whereby this control and regulating device (8) is overridden by a limiting control (10) which consists of a second comparator (26), a limiting controller (28) and a limiter (30), whereby the output of this limiter (30) is connected to the positive input of the first comparator (14) and its input is connected to a desired torque value generator (12) and whereby the negative input of the second comparator (26) is connected to a current-detection device (32) at the input of the converter (6), characterized in that between the limiter (30) and the first comparator (14) a first transfer switch (40) is arranged, the second input of which is connected to the positive input of the second comparator (26), in that between the device (22) for the motor-current actual-value formation and the first comparator (14) a second transfer switch (42) is arranged, the second input of which is connected to the negative input of the second comparator (26), in that these transfer switches (40, 42) are controlled by means of an actuator (44) which is connected on the input side to the output of the current controller (10), and in that subordinate to the control and regulating device (8) is a precontrol angle control (34) which contains a device (38) to determine a precontrol angle (ϕ), whereby this device (38) is connected on the output side to an input of the pulse distributor (20) and on the input side to the output of the current controller (16).

6. Device according to claim 5, characterized in that a microprocessor is provided for the control and regulating device (8), the limiting control (10) and the precontrol angle control (34).

## Revendications

1. Procédé de régulation d'un moteur synchrone (2) alimenté par un convertisseur statique de fréquence et excité en permanence dans le domaine de vitesse de rotation de base avec passage ensuite en affaiblissement du champ pour augmenter le domaine de vitesse de rotation, dans lequel on régule le courant du moteur dans le domaine de vitesse de rotation de base en fonction d'une valeur (I_{Msoll}) de consigne prédéterminée de courant du moteur et d'une valeur (I_{Mist}) réelle déterminée de courant du moteur et dans le domaine d'affaiblissement du champ en fonction d'un angle (ϕ) pilote déterminé,
caractérisé en ce que l'on régule, dans le domaine d'affaiblissement du champ, le courant du moteur en fonction d'une valeur (I_{Gsoll}) de consigne du courant d'entrée du convertisseur statique de fréquence, laquelle peut être prescrite par la charge du moteur synchrone (2), d'une valeur (I_{Gist}) réelle déterminée du courant d'entrée du convertisseur statique de fréquence et de l'angle (ϕ) pilote déterminé, on détermine cet angle (ϕ) pilote en fonction d'une partie, dépassant une grandeur (U_{Stmax}) maximum de commande, d'une valeur (U_{St}) réelle de grandeur de commande et la valeur (I_{Gsoll}) de consigne du courant d'entrée du convertisseur statique de fréquence est proportionnelle à une valeur (I_{Dsoll}) de consigne de couple, qui peut être prescrite.

2. Procédé suivant la revendication 1, caractérisé en ce que dans le domaine des vitesses de rotation de base, la valeur (I_{Msoll}) de consigne du courant du moteur est égale à une valeur (I_{Dsoll}) de consigne de couple, qui peut être prescrite et que l'on peut limiter en fonction d'une valeur (I_{Gsoll}) de consigne de courant d'entrée du convertisseur statique de fréquence et d'une valeur (I_{Gist}) réelle mesurée du courant d'entrée du convertisseur statique de fréquence.

3. Procédé suivant la revendication 1, caractérisé en ce que l'on passe du domaine de la vitesse de rotation de base au domaine d'affaiblissement de champ, lorsque la modulation maximum est atteinte.

4. Procédé suivant la revendication 1, caractérisé en ce que l'on passe du domaine de vitesse de rotation de base au domaine d'affaiblissement de champ dès que l'on a limité la valeur (I_{Dsoll}) de consigne de couple.

5. Dispositif pour la mise en oeuvre du procédé suivant l'une des revendications 1 à 4 de régulation d'un moteur (2) synchrone excité en permanence, comportant un indicateur (4) de position du rotor, ce moteur synchrone (2) étant alimenté à partir d'une source de tension continue au moyen d'un convertisseur (6) statique de fréquence, dont le dispositif (8) de commande et de régulation est constitué d'un premier comparateur (14), d'un régulateur (16) de courant, d'un organe (18) de commande, d'un dispositif (20) de répartition d'impulsions et d'un dispositif (22) de formation d'une valeur réelle du courant du moteur, ce dispositif (8) de commande et de régulation étant d'ordre supérieur à une régulation (10) de limitation, qui est constituée d'un second comparateur (26), d'un régulateur (28) de limitation et d'un limiteur (30), la sortie de ce limiteur (30) étant reliée à l'entrée positive du premier comparateur (14) et son entrée étant reliée à un indicateur (12) de valeur de consigne de couple et l'entrée négative du second comparateur (26) étant reliée à un dispositif (32) de détection de courant à l'entrée du convertisseur (6) statique de fréquence, caractérisé en ce qu'il est disposé entre le limiteur (30) et le premier comparateur (14) un premier commutateur (40), dont la seconde entrée est reliée à l'entrée positive du second comparateur (26), il est disposé entre le dispositif (22) de formation d'une valeur réelle de courant du moteur et le premier comparateur (14) un second commutateur (42), dont la seconde entrée est reliée à l'entrée négative du second comparateur (26), ces commutateurs (40,42) sont commandés au moyen d'un organe (44) de réglage, qui est relié en entrée à la sortie du régulateur (10) de courant, une commande (34) d'angle pilote, qui comprend un dispositif (38) de détermination d'un angle (ϕ) pilote, est d'ordre hiérarchiquement inférieur au dispositif (8) de commande et de régulation, ce dispositif (38) étant relié en sortie à une entrée du dispositif (20) de répartition d'impulsions et en entrée à la sortie du régulateur (16) de courant.

6. Dispositif suivant la revendication 5, caractérisé en ce qu'il est prévu un microprocesseur pour le dispositif (8) de commande et de régulation, la régulation (10) de limitation et la commande (34) d'angle pilote.
